# EUROPEAN PATENT SPECIFICATION

(11) **EP 4 160 976 B1**
(45) Date of publication and mention of the grant of the patent: **26.03.2025**
(21) Application number: 21200138.2
(22) Date of filing: 30.09.2021
(51) Int. Cl.: H04L 9/08, H04B 10/70, H04J 14/02

(54) **LOW LOSS ROUTING FOR QUANTUM COMMUNICATION**
VERLUSTARME LEITWEGLENKUNG FÜR QUANTENKOMMUNIKATION
ROUTAGE À FAIBLE PERTE POUR LA COMMUNICATION QUANTIQUE

(43) Date of publication of application: 05.04.2023
(73) Proprietor: Fraunhofer-Gesellschaft zur Förderung der angewandten Forschung e.V., 80686 München (DE)
(72) Inventor: Steinlechner, Fabian, 07745 Jena (DE); Marques Muniz, André Luiz, 07743 Jena (DE)
(74) Representative: Louis Pöhlau Lohrentz

(56) References cited:
- US-A1- 2007 065 154
- US-A1- 2009 180 616

## Description

The present invention provides a method of low loss routing for quantum communication according to claim 1 and a system of low loss routing for quantum communication according to claim 8.

Quantum states of light, in particular single photon states allow the transmission of quantum information between users and thus enable secure communication, for example via quantum key distribution (QKD). A challenge towards the realization of quantum communication networks is the routing of quantum states to multiple users.

The majority of known quantum communication systems in networks is static and point to point from the source to a particular receiver, with the disadvantage that the system cannot be adapted or changed, for example in order to add new receivers. In static networks the routing is realized by a source with a broad wavelength spectrum, multiplexing of this broad spectrum into small wavelength-bands for the receivers and a fixed assignment of the wavelength-bands to the receivers. The broad spectrum of the source is split according to the number of receivers leading to a low single photon rate transmitted to each receiver and thus to a low communication rate in the case of multiple receivers.

In known dynamic network systems where receivers can be added or removed electrically controlled optical routers are used with the disadvantage of high losses.

Further prior art solutions are disclosed in documents US 2007/065154 A1 (LUO YUHUI [CN] ET AL) 22 March 2007 and US 2009/180616 A1 (BRODSKY MIKHAIL [US] ET AL) 16 July 2009.

It is an object of the present invention to provide a more flexible, improved, and cost-efficient method and system for quantum communication with a high communication bandwidth.

According to the present invention this object is achieved by a method of low loss routing for quantum communication according to claim 1.

The object is achieved by a method of low loss routing for quantum communication, comprising an entangled photon pair source, a router, three or more receivers, and a quantum network connecting each receiver via a quantum channel with the source, whereby the method comprises the steps
i) generation of a quantum state in the source and transmission of the quantum state to the router, whereby the quantum state is an entangled photon pair with a signal photon and an idler photon;
ii) allocation of the quantum state based on the wavelengths of the signal photon to a first quantum channel and the idler photon to a second quantum channel by the router;
iii) transmission of the quantum state via the quantum channels to the two receivers, preferably a first and a second receiver;
iv) detection of the quantum state at the two receivers in order to establish a quantum communication between the two receivers.

According to the invention the source comprises a modification means, and the source is connected with the router via a multi-wavelength quantum channel, and the modification means set the wavelength of the generated quantum state, preferably of the signal and/or idler photon, in step i) in order to enable a specific allocation of the signal and idler photon in step ii) to two specific quantum channels to two specific receivers, in order to enable a quantum communication between the specific first and the specific second receivers.

According to the present invention this object is achieved by a system of low loss routing for quantum communication according to claim 8.

The object is further achieved by a system of low loss routing for quantum communication, comprising
a source for the generation of a quantum state, preferably a single photon source, and/or a weak coherent light source for decoy state quantum key distribution, or
an entangled photon pair source, and
a router for the allocation of the quantum state to one or more quantum channels based on the wavelength of the quantum state, and
a quantum network connecting each receiver via a quantum channel with the source for the transmission of the quantum state, and
two or more receivers for the detection of the quantum state.

According to the invention the source comprises a modification means in order to set the wavelength of the generated quantum state, and
the source is connected with the router via a multi-wavelength quantum channel.

Allocation means here, that the quantum state is redirected or assigned to a quantum channel by the router based on the wavelengths. This means that the spectrum of the quantum state is not split into multiple wavelength bands like in known systems in order to enable a communication between different receivers. The advantage by an allocation is the higher communication rates by the use of the whole wavelength spectrum of the quantum state for a communication between the source and the specific receivers or two specific receivers.

An advantage of the inventive method and system is the high communication rate between two receivers, or the source and one receiver. This is realized by the dynamic generation of the wavelength of the quantum states in the source in addition to the static and thus low loss allocation in the router and the use of the whole spectrum of the photon state. An advantage is, that not the network or the allocation means has to be adjusted or changed in order to enable a communication to different receivers, as in known systems, but the allocation is realized by the wavelength depending generation of the quantum state in the source by the modification means.

The inventive method and system generate a quantum state with a specific wavelength and allocates the quantum state with a specific wavelength to the specific receiver. In contrast to this in known systems a source with a broad wavelength band is used splitting the broad wavelength band of the quantum state by a wavelength multiplexer into multiple parts which leads to a drastically loss of communication rate between two specific receivers.

The object is further achieved by a method of low loss routing for quantum communication, according to one of the embodiments above, for a dynamic network with a new receiver. According to the invention before the steps i) to iv) according to one of the embodiments above, the method comprises the additional steps of:
a) addition of a new receiver to the network by connecting the router with the new receiver via a new quantum channel;
b) allocation of a new wavelength in the router for the new receiver;
c) step i) to iv) according to one of the embodiments above with a quantum state with the new wavelength by the modification means in order to establish a communication between the source and the new receiver or between a specific receiver and the new receiver.

An advantage of the method for a dynamic network is the ability to add new receiver while not changing the components of the source and the router while still enable the high communication rate of the inventive method and system, even for the new receiver. This is realized by the inventive method and system by an allocation of a new wavelength to the new receiver and the ability of the generation of wavelength dependent quantum states by the source and the modification means. In known systems for dynamic networks either the components of the source and/or router are changed or a controllable multiplexer is used leading to high losses. An advantage of the inventive method and system is, that by adding a new receiver not the whole system for communication has to be changed and adapted, for example by changing the source and the router, but only a new wavelength is allocated to the new receivers and a quantum state with the new wavelength is generated by the source and the modification means.

In a preferred embodiment, the single photon in step i) is generated by a single photon laser, preferably a quantum dot. In a preferred embodiment, the single photon in step i) is generated by a laser and an attenuator in order to attenuate the generated laser beam to a single photon level. In a preferred embodiment, the single photon in step i) is generated by a non-linear optical effect, preferably by four-wave-mixing. In a preferred embodiment, the single photon source is a single photon laser, or a laser and an attenuator in order to generate single photons, or a single photon source by the interaction of a pump laser with a non-linear crystal, preferably by four-wave-mixing in order to generate single photons.

In a preferred embodiment, the weak coherent light pulse in step i) is generated by a laser and an attenuator in order to attenuate the generated laser beam to the weak coherent light pulse. In a preferred embodiment, the weak coherent light source is a laser and an attenuator in order to generate the weak coherent light pulse. The laser and the attenuator can be used as the single photon source and/or the weak coherent light source for example by generating single photons by driving the laser at a low power level, or by generating a weak coherent light pulse by driving the laser to various higher power levels or change the attenuation of the attenuator.

In a preferred embodiment, the entangled photon pair in step i) is generated by a non-linear optical effect, preferably by four-wave-mixing or by down-conversion, preferably by spontaneous parametric down conversion. In a preferred embodiment, the entangle photon pair source is a parametric down-conversion source or a four-wave mixing source comprising a pump laser and a non-linear crystal.

In a preferred embodiment, the modification means for the single photon source and/or the weak coherent light source is an adjustable optical cavity, whereby the source is located in or in front of the optical cavity. In a preferred embodiment, the set of the wavelength by the modification means for the single photon source and/or the weak coherent light source in step i) is realized by an adjustable optical cavity. The advantage of this embodiments is the precise wavelength modification, the small wavelength bandwidth of the generated quantum state, and that the source inside the optical cavity is excited to emit photons only in the desired wavelength leading to a higher emission rate. The small wavelength bandwidth enables the allocation of the wavelength in a very precise way without losses.

In a preferred embodiment, the modification means for the single photon source is an adjustable heater or adjustable cooler for the laser generating the single photons and/or the weak coherent light pulse. In a preferred embodiment, the set of the wavelength by the modification means for the single photon source and/or the weak coherent light source in step i) is realized by set of the temperature of the laser of the source enable the source to generate a photon with the wavelength for the specific receiver. The advantage of this embodiments is the cheap and cost-efficient implementation of the modification means.

In a preferred embodiment, the modification means for the single photon source is an adjustable pump laser for the four-wave-mixing, and/or an adjustable heater or adjustable cooler for the non-linear crystal for four-wave-mixing in order to generate single photons. In a preferred embodiment, the set of the wavelength by the modification means for the single photon source in step i) is realized by set of the pump wavelength by an adjustable pump laser for four-wave-mixing, and/or by set of the temperature of the non-linear crystal for four-wave-mixing in order to generate single photons. The advantage of this embodiments is the precise adjustment of the wavelength of the generated quantum state.

In a preferred embodiment, the modification means for the single photon source and/or the weak coherent light source is a dispersive element, preferably a reflective or transitive dispersive element, more preferably a grating, and/or a diffraction grating, and/or a filter, and/or a Bragg grating. In a preferred embodiment, the dispersive element is arranged in or behind the source. In a preferred embodiment, the set of the wavelength by the modification means for the single photon source and/or the weak coherent light source in step i) is realized by a dispersive element. The advantage of this embodiments are the low costs and the precise wavelengths modification possibilities.

In a preferred embodiment, the modification means for the entangled photon source is an adjustable pump laser of the source for pumping a non-linear crystal for down-conversion or for four-wave-mixing. In a preferred embodiment, the modification means for the entangled photon source is an adjustable heater or adjustable cooler for the non-linear crystal or for the pump laser. In a preferred embodiment, the set of the wavelength for the entangled photon source in step i) is realized by set of the pump wavelength for the non-linear crystal by an adjustable pump laser for down-conversion or four-wave-mixing or is realized by set of the temperature of the non-linear crystal for down-conversion or four-wave-mixing. Down-conversion or four-wave-mixing are nonlinear optical effects, whereby the interaction of the non-linear crystal with one or two wavelengths produces photons with new wavelengths. The wavelengths of the generated photons are dependent on the phase matching condition in these non-linear processes, for example dependent on the pump wavelength and/or on the temperature of the non-linear crystal. An advantage of this embodiment is the wavelength dependent generation of both photons of the entangled photon pair.

In a preferred embodiment, the modification means for the entangled photon source, and/or the single photon source, and/or the weak coherent light source is an acousto-optic modulator, and/or an electro-optic modulator, and/or a phase modulator, and/or a Lithium niobate (LN) phase modulator in the source in order to realize a frequency shift of a generated photon in the source by a linear phase ramp of the modulator. In a preferred embodiment, the set of the wavelength for the entangled photon source, and/or the single photon source, and/or the weak coherent light source in step i) is realized by a frequency shift of the wavelength of the quantum state due to a phase modulation of the quantum state, preferably by a linear phase ramp of the modulator. An advantage of this embodiment is the possibility of a separate wavelength change of each photon of the quantum state behind the pair production step in the source.

Set the wavelength of the generated quantum state means here, that the modification means influences the wavelength in the generation process of the quantum state in the source or influences the wavelength by a change of the wavelength of the generated quantum state in the source. The first case can for example be realized by a single photon laser with an adjustable optical cavity or a temperature means, or by an entangled photon source by changing the pump wavelength and/or the temperature of the non-linear crystal. That means the modification means is a component of the source influencing the wavelength of the quantum state in the generation process. The second case can for example be realized by one of the modulators mentioned above in a single photon source or an entangled photon pair source. That means the modification means is a component of the source influencing the wavelength of the quantum state after the generation process.

In a preferred embodiment, the wavelength bandwidth of the quantum state of the source is smaller as the wavelength bandwidth of the channels of the router, preferably smaller as the wavelength bandwidth of each channel of the router. In a preferred embodiment, the wavelength bandwidth of the generated single photons, or weak coherent light pulse, or signal photon and idler photon is smaller as the wavelength bandwidth of the channels of the router. The advantage of this embodiment is that no photons are lost in the router by the allocation of the quantum states according to the wavelength to the intended receivers for the quantum communication. In contrast to that, in known systems the bandwidth of the source is split into multiple parts for multiple receivers introducing high losses, reducing the communication bandwidth by the losses and the number of the receivers.

In a preferred embodiment, the system comprises a control means, whereas control means set the wavelength of the quantum state in order to allow a communication between the source and one specific receiver, or between two specific receivers. In a preferred embodiment, the source, and/or the modification means is controlled by the control means.

In a preferred embodiment, the whole wavelength bandwidth of the source is used for the communication between the source and one specific receiver, or between two specific receivers. The advantage of this embodiment is the higher transmission rates by the use of the whole wavelength bandwidth.

In a preferred embodiment, the allocation in step ii) is a realized by static routing. In a preferred embodiment, the router is a static router. Static means here, that the routing is not realized by a switch or a movable or changeable element, but by a fixed and/or determined spatial separation of the quantum state according to its wavelength. The advantage of that embodiment is the lower cost of the router and the higher transmission rate in the router.

In a preferred embodiment, the router is a grating, preferably a in fiber grating or a free space grating, preferably a Bragg grating.

In a preferred embodiment, the allocation in step ii) is a realized by diffraction. In a preferred embodiment, the router is a diffractive optical element.

In a preferred embodiment, the quantum channels are guided channels, preferably fiber channels or the quantum channels are unguided channels, preferably free space channels. In a preferred embodiment, in step iii) the transmission is realized by guidance of the quantum state in a guided quantum channel, preferably in a fiber. In a preferred embodiment, in step iii) the transmission is realized by the alignment of the quantum state at the router and a unguided transmission in an unguided channel, preferably in a free space channel.

In a preferred embodiment, the router is a diffractive optical element in order to split a broad spectral bandwidth into multiple spectral channel-bandwidths and a mirror or a mirror system, and/or a lens or a lens system. The diffractive optical element realizes the wavelength separation, the mirror or lens system realizes the alignment or guidance of the quantum state in order to transmit the quantum state in an un-guided channel.

Add a new channel for a guided channel means, that the router is connected with the channel. Add a new channel for an unguided channel means, that the router is adjusted in order to enable a transmission of the quantum state towards the new receivers by alignment. This adjustment can be realized for example by a diffractive optical element, and/or a mirror or mirror system, and/or lens or lens system.

In a preferred embodiment, the detection in step iv) is realized by a measurement means and a detection means, whereby the measurement means set the property to be measured and the detection means detect the photon. A property to be measured for the communication could be for example the polarization, and/or the time, and/or orbital angular momentum (OAM) or spin angular momentum (SAM).

In a preferred embodiment, the entangled photon state is entangled in the polarization, and/or the time, and/or orbital angular momentum (OAM) or spin angular momentum (SAM).

In a preferred embodiment, the measurement means comprises a polarizer, and/or a polarizing beam splitter, and/or an electro-optical modulator, and/or an acousto-optic modulator, and/or one or more waveplates, and/or an interferometer, and/or a Spatial Light Modulator.

In a preferred embodiment, the detection means is a single photon detector, preferably germanium (Ge), or silicon (Si), or germanium on silicon (Ge on Si) single-photon avalanche diode (SPAD), or Indium gallium arsenide (InGaAs/Inp) single photon detectors, or semiconductor-based single-photon avalanche diode (SPAD), or superconducting nanowire single-photon detector (SNSPD), or Silicon Avalanche Photodiodes (Si APD).

In a preferred embodiment, the detection means comprise one or more detectors to measure the photons in at least two mutually unbiased measurement bases, and/or to measure the photons in at least one or more orthogonal states.

The above and other aspects, features and advantages of the present invention will become more apparent from the following detailed description when taken in conjunction with the accompanying drawings.

### Brief Description of the Drawings:

- Fig. 1:: schematic diagram of the inventive system for low loss routing;
- Fig. 2:: schematic diagram of the influence of the modification means on the wavelength of a single photon;
- Fig. 3:: schematic diagram of the influence of the modification means on the wavelength of a photon pair;
- Fig. 4:: schematic diagram of the inventive system with a diffractive optical element and lens system as a modification means;
- Fig. 5:: change of the channel for the inventive system from Fig. 4.

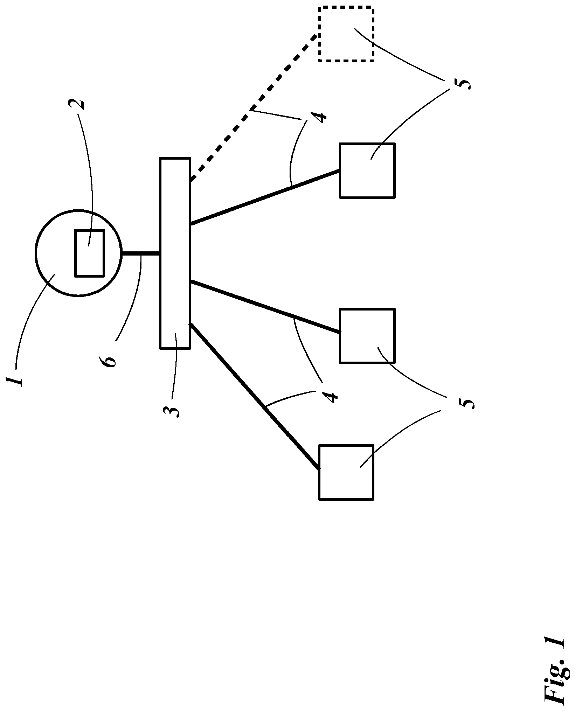

Fig. 1 shows the inventive system for low loss routing for quantum communication comprising a source 1 with a modification means 2, a router 3, a quantum network connecting each receiver 5 via a quantum channel 4 with the source 1.

The source 1 in Fig. 1 can be a single photon source, and/or a weak coherent light source, or an entangled photon source. The source 1 generates a quantum state, whereby the wavelength of the quantum state is set by the modification means 2 and the source 1. The quantum state of the single photon source is a single photon. The quantum state of the weak coherent light source is a weak coherent light pulse. The quantum state of the entangled photon source is an entangled photon pair. The quantum state is then guided via a multi-wavelength channel 6 from the source 1 to the router 3.

Set the wavelength of the generated quantum state means here, that the modification means 2 influences the wavelength in the generation process of the quantum state in the source 1 or influences the wavelength by a change of the wavelength of the quantum state in the source 1.

The modification means 2 for the single photon source and/or the weak coherent light source can be an adjustable optical cavity, or an adjustable heater or adjustable cooler for the laser generating the single photons or the weak coherent light pulse, or an adjustable pump laser for the four-wave-mixing, and/or an adjustable heater or adjustable cooler for the non-linear crystal for four-wave-mixing, or a dispersive element, or an acousto-optic modulator, and/or an electro-optic modulator, and/or a phase modulator, and/or a Lithium niobate (LN) phase modulator.

The modification means 2 for the entangled photon source can be an adjustable pump laser of the source for pumping a non-linear crystal for down-conversion or for four-wave-mixing, or adjustable heater or adjustable cooler for the non-linear crystal or for the pump laser, or an acousto-optic modulator, and/or an electro-optic modulator, and/or a phase modulator, and/or a Lithium niobate (LN) phase modulator.

The router 3 allocates the quantum state according to the wavelength of the quantum state to a specific quantum channel 4 in order to transmit the quantum state to a specific receiver 5, or in the case of an entangled photon pair to two specific receivers 5. The allocation is realized by a fixed correlation of the output of the router 3 with each quantum channel 4 and by a fixed redirection of the quantum state according to its wavelength in the router 3.

As shown in Fig. 1 three receivers 5 are connected via the quantum channels 4 with the router 3 depicted by the solid lines. A new receiver 5 can be added to the network via a new quantum channel 4 depicted by dashed lines, without changing any components in the router 3 or the source 1. The communication to the new receiver 5 (dashed) is realized by the generation of the quantum state in the source 1 with the new wavelength by the source 1 and the modification means 2.

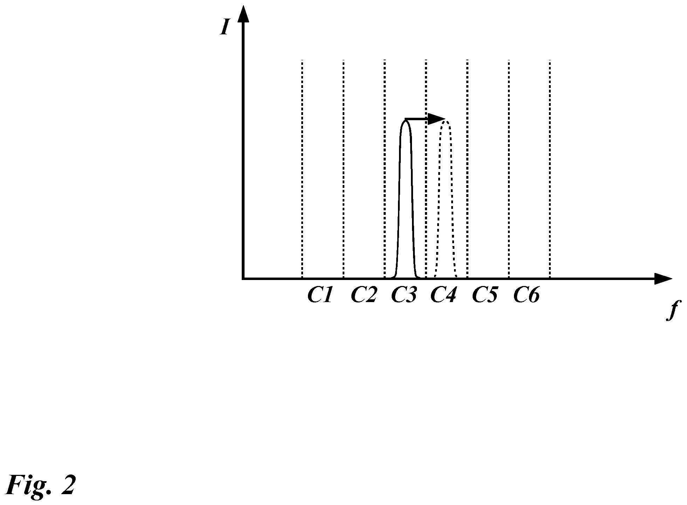

Fig. 2 shows an example of the influence of the modification means 2 on the wavelength of a quantum state as a single photon. The solid line shows the wavelength spectrum of a generated quantum state, in the case of Fig. 2 for the quantum channel C3. The wavelength bandwidth of the quantum state of the source 1 is smaller than the wavelength bandwidth of the channels of the router 3. In a new step the communication with quantum channel C4 should be realized.

For that the modification means 2 and the source 1 generate by the influence of the modification means 2 the quantum states with a wavelength spectrum for quantum channel 4 C4 as depicted by the dashed line.

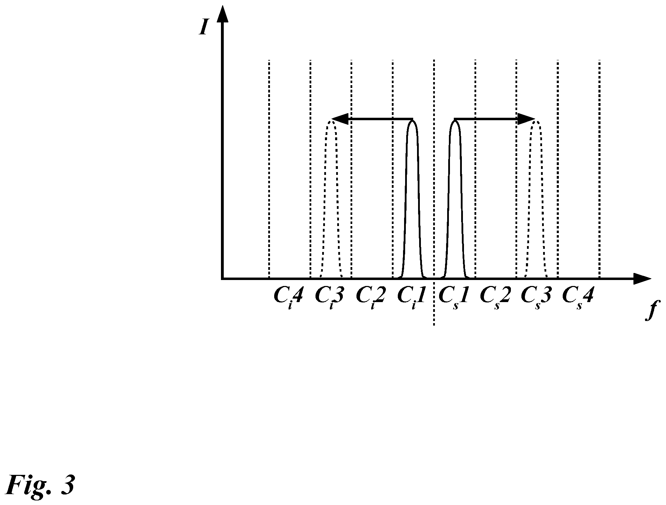

Fig. 3 shows an example of the influence of the modification means 2 on the wavelength of a quantum state as an entangled photon pair. The wavelengths of the generated photons are dependent on the phase matching condition in non-linear processes like down-conversion or four wave mixing, for example dependent on the pump wavelength and/or on the temperature of the non-linear crystal. Fig. 3 shows the symmetric shift by the phase matching conditions of the signal photon in quantum channel Cₛ1 and the idler photon in quantum channel Cᵢ1 toward the quantum channels Cₛ3 and Cᵢ3 by the influence of the modification means 2 on the source 1.

The modification means 2 is influencing the generation of the entangled photon pair and thus the wavelength of both entangled photons. This can be realized by the modification means 2 as an adjustable pump laser of the source for pumping a non-linear crystal for down-conversion or for four-wave-mixing, or an adjustable heater or an adjustable cooler for the non-linear crystal or for the pump laser. It is also possible to set the wavelength for both photons of an entangled photon pair separate by an acousto-optic modulator, and/or an electro-optic modulator, and/or a phase modulator, and/or a Lithium niobate (LN) phase modulator for each photon.

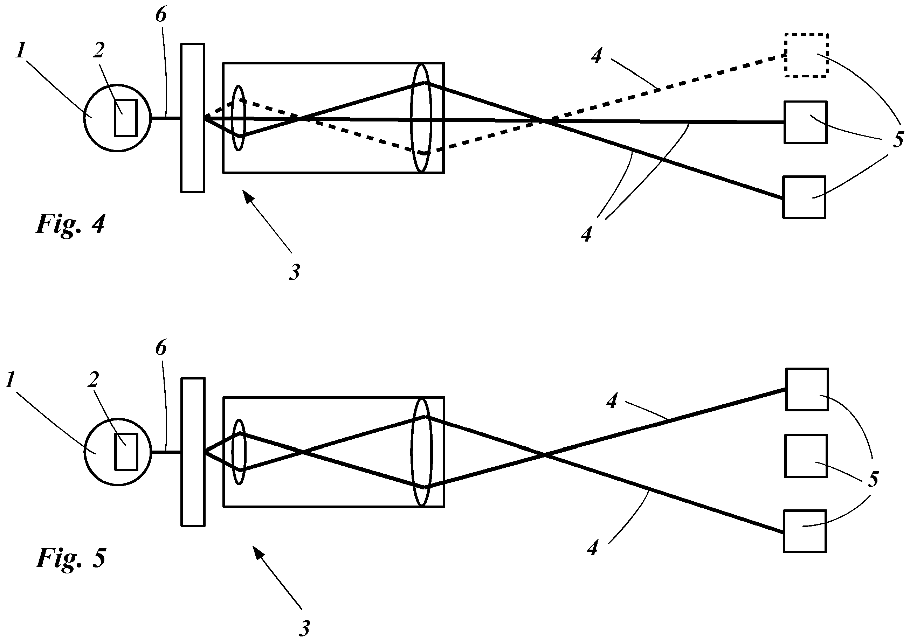

Fig. 4 and 5 show the inventive system with a router 3 as a diffractive optical element and a lens system. The diffractive optical element realizes the wavelength separation, lens system realizes the alignment or guidance of the quantum state in order to transmit the quantum state in an un-guided quantum channel 4 to the receivers 5. As in Fig. 1 in Fig. 4 an additional receiver 5 (dashed) can be added to the network for a communication between the new receiver 5 and an already existing receiver 5 (Fig. 5), by the generation of a quantum state with a new wavelength in the source 1 and the modification means 2 and an allocation of the quantum state according to its wavelength to the new receiver 5.

### Reference signs:

- 1: source
- 2: modification means
- 3: router
- 4: quantum channel
- 5: receiver
- 6: multi-wavelength quantum channel

## Claims

1. Method of low loss routing for quantum communication, comprising an entangled photon pair source (1), a router (3), three or more receivers (5), and a quantum network connecting each receiver via a quantum channel (4) with the source (1), and the source (1) is connected with the router (3) via a multi-wavelength quantum channel (6), whereby the method comprises the steps
i) generation of a quantum state in the source (1) and transmission of the quantum state to the router (3), whereby the quantum state is an entangled photon pair with a signal photon and an idler photon;
ii) allocation of the quantum state based on the wavelengths of the signal photon to a first quantum channel (4) and the idler photon to a second quantum channel (4) by the router (3);
iii) transmission of the quantum state via the quantum channels (4) to the two receivers (5), preferably a first and a second receiver (5);
iv) detection of the quantum state at the two receivers (5) in order to establish a quantum communication between the two receivers (5);
**characterized in that**
the source (1) comprises a modification means (2), and
the modification means (2) set the wavelength of the generated quantum state, preferably of the signal and/or idler photon, in step i) in order to enable a specific allocation of the signal and idler photon in step ii) to two specific quantum channels (4) to two specific receivers (5), in order to enable a quantum communication between the specific first and second receivers (5).

2. Method of low loss routing for quantum communication, according to claim 1, for a dynamic network with a new receiver (5),
**characterized in that**
before the steps i) to iv) the method comprises for a dynamic network the additional steps of:
a) addition of a new receiver (5) to the network by connecting the router (3) with the new receiver (5) via a new quantum channel (4);
b) allocation of a new wavelength in the router (3) for the new receiver (5);
c) step i) to iv) according to one of the claims 1 or 2 with a quantum state with the new wavelength by the modification means (2) in order to establish a communication between the source (1) and the new receiver (5) or between a specific receiver (5) and the new receiver (5).

3. Method according to one of the claims 1 or 2,
**characterized in that**
the entangled photon pair in step i) is generated by a non-linear optical effect, preferably by four-wave-mixing or by down-conversion, preferably by spontaneous parametric down conversion.

4. Method according to one of the claims 1 to 3,
**characterized in that**
the set of the wavelength for the entangled photon source (1) in step i) is realized by set of the pump wavelength for the non-linear crystal by an adjustable pump laser for down-conversion or four-wave-mixing, or by set of the temperature of the non-linear crystal for down-conversion or four-wave-mixing, and/or by a frequency shift of the wavelength of the quantum state due to a phase modulation of the quantum state, preferably by a linear phase ramp of a modulator behind the pair generation process.

5. Method according to one of the claims 1 to 4,
**characterized in that**
the allocation in step ii) is a realized by static routing, preferably a in fiber grating or a free space grating, preferably a Bragg grating, or
the allocation in step ii) is a realized by diffraction.

6. Method according to one of the claims 1 to 5,
**characterized in that**
in step iii) the transmission is realized by guidance of the quantum state in a guided quantum channel (4), preferably in a fiber, and/or
in step iii) the transmission is realized by the alignment of the quantum state at the router (3) and an unguided transmission in an unguided channel (4), preferably in a free space channel (4).

7. Method according to one of the claims 1 to 6,
**characterized in that**
the detection in step iv) is realized by a measurement means and a detection means.

8. System of low loss routing for quantum communication, comprising
an entangled photon pair source (1) for the generation of a quantum state, and
a router (3) for the allocation of the quantum state to one or more quantum channels (4) based on the wavelength of the quantum state, and
a quantum network connecting each receiver (5) via a quantum channel (4) with the source (1) for the transmission of the quantum state, and
two or more receivers (5) for the detection of the quantum state, and
the source (1) is connected with the router (3) via a multi-wavelength quantum channel (6)
wherein
the source (1) comprises a modification means (2) in order to enable a quantum communication between two specific first and second receivers (5) according to independent method claim 1.

9. System according to claim 8,
**characterized in that**
the entangle photon pair source (1) is a parametric down-conversion source (1) or a four-wave mixing source (1) comprising a pump laser and a non-linear crystal.

10. System according to one of the claims 8 or 9,
**characterized in that**
the modification means (2) for the entangled photon source (1) is an adjustable pump laser of the source (1) for pumping a non-linear crystal for down-conversion or for four-wave-mixing, or an adjustable heater or adjustable cooler for the non-linear crystal or for the pump laser, and/or an acousto-optic modulator, and/or an electro-optic modulator, and/or a phase modulator, and/or a Lithium niobate (LN) phase modulator in the source (1) in order to realize a frequency shift of a generated photon in the source (1) by a linear phase ramp of the modulator.

11. System according to one of the claims 8 to 10,
**characterized in that**
the router (3) is a static router (3), preferably a in fiber grating or a free space grating, preferably a Bragg grating, or diffractive optical element.

## Patentansprüche

1. Verfahren zum verlustarmen Routing für Quantenkommunikation, umfassend eine verschränkte Photonenpaarquelle (1), einen Router (3), drei oder mehrere Empfänger (5) und ein Quantennetzwerk, das jeden Empfänger über einen Quantenkanal (4) mit der Quelle (1) verbindet, wobei die Quelle (1) über einen Multiwellenlängen-Quantenkanal (6) mit dem Router (3) verbunden ist, und wobei das Verfahren die Schritte umfasst:
i) Erzeugung eines Quantenzustands in der Quelle (1) und Übertragung des Quantenzustands an den Router (3), wobei der Quantenzustand ein verschränktes Photonenpaar mit einem Signalphoton und einem Idlerphoton ist;
ii) Zuordnung des Quantenzustands basierend auf den Wellenlängen des Signalphotons zu einem ersten Quantenkanal (4) und des Idlerphotons zu einem zweiten Quantenkanal (4) durch den Router (3);
iii) Übertragung des Quantenzustands über die Quantenkanäle (4) zu den beiden Empfängern (5), vorzugsweise einem ersten und einem zweiten Empfänger (5);
iv) Detektion des Quantenzustands bei den beiden Empfängern (5), um eine Quantenkommunikation zwischen den beiden Empfängern (5) herzustellen;
**dadurch gekennzeichnet,**
**dass** die Quelle (1) ein Modifizierungsmittel (2) umfasst, und
das Modifizierungsmittel (2) die Wellenlänge des erzeugten Quantenzustands, vorzugsweise des Signal- und/oder Idlerphotons, in Schritt i) einstellt, um eine spezifische Zuordnung des Signal- und Idlerphotons in Schritt ii) zu zwei spezifischen Quantenkanälen (4) zu zwei spezifischen Empfängern (5) zu ermöglichen, um eine Quantenkommunikation zwischen dem spezifischen ersten und zweiten Empfänger (5) zu ermöglichen.

2. Verfahren zum verlustarmen Routing für Quantenkommunikation nach Anspruch 1 für ein dynamisches Netzwerk mit einem neuen Empfänger (5), **dadurch gekennzeichnet,**
**dass** das Verfahren vor den Schritten i) bis iv) die folgenden zusätzlichen Schritte für ein dynamisches Netzwerk umfasst:
a) Hinzufügen eines neuen Empfängers (5) zum Netzwerk durch Verbinden des Routers (3) mit dem neuen Empfänger (5) über einen neuen Quantenkanal (4);
b) Zuordnung einer neuen Wellenlänge im Router (3) für den neuen Empfänger (5);
c) Schritt i) bis iv) nach einem der Ansprüche 1 oder 2 mit einem Quantenzustand mit der neuen Wellenlänge durch das Modifizierungsmittel (2), um eine Kommunikation zwischen der Quelle (1) und dem neuen Empfänger (5) oder zwischen einem bestimmten Empfänger (5) und dem neuen Empfänger (5) herzustellen.

3. Verfahren nach einem der Ansprüche 1 oder 2,
**dadurch gekennzeichnet,**
**dass** das verschränkte Photonenpaar in Schritt i) durch einen nichtlinearen optischen Effekt erzeugt wird, vorzugsweise durch Vierwellenmischung oder durch Abwärtskonversion, vorzugsweise durch spontane parametrische Abwärtskonversion.

4. Verfahren nach einem der Ansprüche 1 bis 3,
**dadurch gekennzeichnet,**
**dass** die Einstellung der Wellenlänge für die verschränkte Photonenquelle (1) in Schritt i) durch Einstellung der Pumpwellenlänge für den nichtlinearen Kristall durch einen regelbaren Pumplaser für Abwärtskonversion oder Vierwellenmischung realisiert wird, oder durch Einstellung der Temperatur des nichtlinearen Kristalls zur Abwärtskonversion oder Vierwellenmischung, und/oder durch eine Frequenzverschiebung der Wellenlänge des Quantenzustands aufgrund einer Phasenmodulation des Quantenzustands, vorzugsweise durch eine lineare Phasenrampe eines Modulators hinter dem Paarbildungsprozess.

5. Verfahren nach einem der Ansprüche 1 bis 4,
**dadurch gekennzeichnet,**
**dass** die Zuordnung in Schritt ii) durch statisches Routing erfolgt, vorzugsweise durch ein Fasergitter oder ein Freiraumgitter, vorzugsweise ein Bragg-Gitter realisiert wird, oder
**dass** die Zuordnung in Schritt ii) durch Beugung realisiert wird.

6. Verfahren nach einem der Ansprüche 1 bis 5,
**dadurch gekennzeichnet,**
**dass** in Schritt iii) die Übertragung durch Führung des Quantenzustands in einem geführten Quantenkanal (4), vorzugsweise in einer Faser, realisiert wird, und/oder
**dass** in Schritt iii) die Übertragung durch die Ausrichtung des Quantenzustands am Router (3) und eine ungeführte Übertragung in einem ungeführten Kanal (4), vorzugsweise in einem Freiraumkanal (4), realisiert wird.

7. Verfahren nach einem der Ansprüche 1 bis 6,
**dadurch gekennzeichnet,**
**dass** die Detektion in Schritt iv) durch ein Messmittel und ein Detektionsmittel realisiert wird.

8. System zum verlustarmen Routing für Quantenkommunikation, umfassend:
eine verschränkte Photonenpaarquelle (1) zur Erzeugung eines Quantenzustands, und
einen Router (3) für die Zuordnung des Quantenzustands zu einem oder mehreren Quantenkanälen (4) basierend auf der Wellenlänge des Quantenzustands, und
ein Quantennetzwerk, das jeden Empfänger (5) über einen Quantenkanal (4) mit der Quelle (1) für die Übertragung des Quantenzustands verbindet, und zwei oder mehrere Empfänger (5) zur Detektion des Quantenzustands, und
wobei die Quelle (1) mit dem Router (3) über einen Multiwellenlängen-Quantenkanal (6) verbunden ist,
wobei die Quelle (1) ein Modifizierungsmittel (2) umfasst, um eine Quantenkommunikation zwischen zwei spezifischen ersten und zweiten Empfängern (5) gemäß dem unabhängigen Verfahrensanspruch 1 zu ermöglichen.

9. System nach Anspruch 8,
**dadurch gekennzeichnet,**
**dass** die verschränkte Photonenpaarquelle (1) eine parametrische Abwärtskonversionsquelle (1) oder eine Vierwellenmischquelle (1) mit einem Pumplaser und einem nichtlinearen Kristall ist.

10. System nach einem der Ansprüche 8 oder 9,
**dadurch gekennzeichnet,**
**dass** das Modifizierungsmittel (2) für die verschränkte Photonenquelle (1) ein regelbarer Pumplaser der Quelle (1) zum Pumpen eines nichtlinearen Kristalls zur Abwärtskonversion oder zur Vierwellenmischung ist, oder ein regelbarer Heizer oder ein regelbarer Kühler für den nichtlinearen Kristall oder für den Pumplaser, und/oder ein akusto-optischer Modulator und/oder ein elektrooptischer Modulator und/oder ein Phasenmodulator und/oder ein Lithium-Niobat (LN)-Phasenmodulator in der Quelle (1), um eine Frequenzverschiebung eines erzeugten Photons in der Quelle (1) durch eine lineare Phasenrampe des Modulators zu realisieren.

11. System nach einem der Ansprüche 8 bis 10,
**dadurch gekennzeichnet,**
**dass** der Router (3) ein statischer Router (3), vorzugsweise ein Fasergitter oder ein Freiraumgitter, vorzugsweise ein Bragg-Gitter, oder ein diffraktives optisches Element ist.

## Revendications

1. Méthode de routage à faible perte pour la communication quantique, comprenant une source de paires de photons intriqués (1), un routeur (3), trois récepteurs (5) ou plus, et un réseau quantique reliant chaque récepteur via un canal quantique (4) à la source (1), et la source (1) est reliée au routeur (3) via un canal quantique à longueurs d'onde multiples (6), la méthode comprenant les étapes suivantes
i) génération d'un état quantique dans la source (1) et transmission de l'état quantique au routeur (3), l'état quantique étant une paire de photons intriqués avec un photon de signal et un photon de idler ;
ii) attribution de l'état quantique basé sur les longueurs d'onde du photon de signal à un premier canal quantique (4) et du photon de idler à un second canal quantique (4) par le routeur (3) ;
iii) transmission de l'état quantique via les canaux quantiques (4) aux deux récepteurs (5), de préférence un premier et un second récepteur (5) ;
iv) détection de l'état quantique aux deux récepteurs (5) afin d'établir une communication quantique entre les deux récepteurs (5) ;
**caractérisée en ce que**
la source (1) comprend un moyen de modification (2), et
le moyen de modification (2) règle la longueur d'onde de l'état quantique généré, de préférence du photon de signal et/ou du photon de idler, à l'étape i) afin de permettre une allocation spécifique du photon de signal et du photon de idler à l'étape ii) à deux canaux quantiques spécifiques (4) à deux récepteurs spécifiques (5), afin de permettre une communication quantique entre le premier et le second récepteur spécifiques (5).

2. Méthode de routage à faible perte pour la communication quantique, selon la revendication 1, pour un réseau dynamique avec un nouveau récepteur (5),
**caractérisée en ce que**
avant les étapes i) à iv), la méthode comprend, pour un réseau dynamique, les étapes supplémentaires suivantes :
a) ajout d'un nouveau récepteur (5) au réseau en connectant le routeur (3) au nouveau récepteur (5) via un nouveau canal quantique (4) ;
b) attribution d'une nouvelle longueur d'onde dans le routeur (3) pour le nouveau récepteur (5) ;
c) étape i) à iv) selon l'une des revendications 1 ou 2 avec un état quantique avec la nouvelle longueur d'onde par le moyen de modification (2) afin d'établir une communication entre la source (1) et le nouveau récepteur (5) ou entre un récepteur spécifique (5) et le nouveau récepteur (5).

3. Méthode selon l'une des revendications 1 ou 2,
**caractérisée en ce que**
la paire de photons intriqués de l'étape i) est générée par un effet optique non linéaire, de préférence par mélange à quatre ondes ou par conversion vers le bas, de préférence par conversion paramétrique spontanée vers le bas.

4. Méthode selon l'une des revendications 1 ou 3,
**caractérisée en ce que**
le réglage de la longueur d'onde pour la source de photons intriqués (1) à l'étape i) est réalisé par le réglage de la longueur d'onde de pompe pour le cristal non linéaire par un laser de pompe réglable pour la conversion vers le bas ou le mélange à quatre ondes, ou par le réglage de la température du cristal non linéaire pour la conversion vers le bas ou le mélange à quatre ondes, et/ou par un décalage de fréquence de la longueur d'onde de l'état quantique dû à une modulation de phase de l'état quantique, de préférence par une rampe de phase linéaire d'un modulateur derrière le processus de génération de paires.

5. Méthode selon l'une des revendications 1 ou 4,
**caractérisée en ce que**
l'attribution à l'étape ii) est réalisée par un routage statique, de préférence un réseau de fibres ou un réseau en espace libre, de préférence un réseau de Bragg, ou
l'attribution à l'étape ii) est réalisée par diffraction.

6. Méthode selon l'une des revendications 1 ou 5,
**caractérisée en ce que**
à l'étape iii), la transmission est réalisée par guidage de l'état quantique dans un canal quantique guidé (4), de préférence dans une fibre, et/ou
à l'étape iii), la transmission est réalisée par l'alignement de l'état quantique au niveau du routeur (3) et une transmission non guidée dans un canal non guidé (4), de préférence dans un canal en espace libre (4).

7. Méthode selon l'une des revendications 1 ou 6,
**caractérisée en ce que**
la détection à l'étape iv) est réalisée par un moyen de mesure et un moyen de détection.

8. Système de routage à faible perte pour la communication quantique, comprenant
une source de paires de photons intriqués (1) pour la génération d'un état quantique, et
un routeur (3) pour l'attribution de l'état quantique à un ou plusieurs canaux quantiques (4) sur la base de la longueur d'onde de l'état quantique, et un réseau quantique reliant chaque récepteur (5) à la source (1) via un canal quantique (4) pour la transmission de l'état quantique, et
deux ou plusieurs récepteurs (5) pour la détection de l'état quantique, et la source (1) est connectée au routeur (3) par l'intermédiaire d'un canal quantique à longueurs d'onde multiples (6),
dans lequel la source (1) comprend un moyen de modification (2) afin de permettre une communication quantique entre deux premiers et seconds récepteurs (5) spécifiques selon la méthode indépendante revendiquée 1..

9. Système selon la revendication 8,
**caractérisé en ce que**
la source de paires de photons intriqués (1) est une source de conversion paramétrique vers le bas (1) ou une source de mélange à quatre ondes (1) comprenant un laser de pompe et un cristal non linéaire.

10. Système selon l'une des revendications 8 ou 9,
**caractérisé en ce que**
le moyen de modification (2) de la source de photons intriqués (1) est un laser de pompe réglable de la source (1) pour le pompage d'un cristal non linéaire pour la conversion vers le bas ou pour le mélange à quatre ondes, ou un chauffage réglable ou un refroidisseur réglable pour le cristal non linéaire ou pour le laser de pompe, et/ou un modulateur acousto-optique, et/ou un modulateur électro-optique, et/ou un modulateur de phase, et/ou un modulateur de phase en niobate de lithium (LN) dans la source (1) afin de réaliser un décalage de fréquence d'un photon généré dans la source (1) par une rampe de phase linéaire du modulateur.

11. Système selon l'une des revendications 8 à 10,
**caractérisé en ce que**
le routeur (3) est un routeur statique (3), de préférence un réseau de fibres ou un réseau en espace libre, de préférence un réseau de Bragg, ou un élément optique diffractif.
